# EUROPÄISCHE PATENTSCHRIFT

(11) **EP 2 259 957 B1**
(45) Veröffentlichungstag und Bekanntmachung des Hinweises auf die Patenterteilung: **03.10.2012**
(21) Anmeldenummer: 08873726.7
(22) Anmeldetag: 20.11.2008
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR VEHICULE A MOTEUR

(30) Priorität: 31.03.2008 DE 102008016742
(43) Veröffentlichungstag der Anmeldung: 15.12.2010
(73) Patentinhaber: ThyssenKrupp Presta Aktiengesellschaft, 9492 Eschen (LI)
(72) Erfinder: OEHRI, Martin, FL-9487 Gamprin (LI); SENN, Mathias, 9472 Grabs (CH)
(74) Vertreter: Hofmann, Ralf U.
(86) Internationale Anmeldenummer: PCT/EP2008/009794
(87) Internationale Veröffentlichungsnummer: WO 2009/121386

(56) Entgegenhaltungen:
- EP-A- 0 641 705
- DE-B3-102005 052 123
- GB-A- 2 291 840
- GB-A- 2 311 839
- US-A- 4 793 204

## Beschreibung

Die Erfindung bezieht sich auf eine Lenksäule für ein Kraftfahrzeug, die zumindest in ihrer Längsrichtung verstellbar ist, umfassend eine Trageinheit , die mit dem Chassis des Kraftfahrzeugs verbindbar ist, eine Stelleinheit, die zwischen Seitenwangen der Trageinheit angeordnet ist, und einen Spannmechanismus, in dessen geöffnetem Zustand die Stelleinheit gegenüber der Trageinheit zumindest in die Längsrichtung der Lenksäule verstellbar ist und in dessen geschlossenem Zustand die eingestellte Position der Stelleinheit gegenüber der Trageinheit festgestellt ist und die einen Spannbolzen umfasst, welcher Öffnungen in den Seitenwangen der Trageinheit durchsetzt und beim Öffnen und Schließen des Spannmechanismus um seine Achse gedreht wird, wobei mindestens ein zwischen den Seitenwangen der Trageinheit angeordnetes und durch die Drehung des Spannbolzens beim Öffnen und Schließen des Spannmechanismus verstelltes Feststellteil vorhanden ist, welches im geschlossenen Zustand des Spannmechanismus in ein mit der Stelleinheit verbundenes Gegenfeststellteil eingreift oder zumindest bei einer im Falle eines Fahrzeugcrashes einsetzenden Verschiebung der Stelleinheit gegenüber der Trageinheit mit dem Gegenfeststellteil in Eingriff gelangt und welches im geöffneten Zustand des Spannmechanismus vom Gegenfeststellteil distanziert ist.

Verstellbare Lenksäulen dienen zur Anpassung der Position des Lenkrades an die Sitzposition des Fahrers und sind in unterschiedlichen Ausführungsformen bekannt. Neben verstellbaren Lenksäulen, die nur in die Längen- oder Höhen- bzw. Neigungsrichtung verstellbar sind, sind sowohl in die Längen- als auch Höhen- bzw. Neigungsrichtung verstellbare Lenksäulen bekannt. Beispielsweise geht eine derartige verstellbare Lenksäule aus der EP 0 802 104 A1 hervor. Im geöffneten Zustand des Spannmechanismus ist eine Stelleinheit, welche die Lenkspindel drehbar lagert, gegenüber einer chassisfesten Trageinheit sowohl in Richtung einer Längenverstellung als auch in Richtung einer Höhen- bzw. Neigungsverstellung der Lenksäule verstellbar. Um die Haltekräfte im geschlossenen Zustand des Spannmechanismus zu erhöhen, umfasst der Spannmechanismus nach Art einer Lamellenkupplung zusammenwirkende sich kreuzende Lamellenpakete.

Für verstellbare Lenksäulen sind bereits verschiedene Vorrichtungen vorgeschlagen worden, um im Falle eines Fahrzeugcrashes eine zusätzliche Haltekraft gegen eine Verschiebung der Stelleinheit gegenüber der Trageinheit zu bewirken, damit eine unkontrollierte Verstellung der Lenksäule verhindert wird, wodurch auch eine kontrollierte Energieabsorption durch eine Energieabsorptionseinrichtung der Lenksäule ermöglicht wird. Eine solche Energieabsorptionseinrichtung besteht beispielsweise darin, dass die Trageinheit als Art Schlitten ausgebildet ist, der verschiebbar an einer starr am Fahrzeugchassis angebrachten Chassiseinheit verschiebbar gelagert ist, wobei zwischen der Chassiseinheit und der Trageinheit eine Energieabsorptionseinrichtung ausgebildet ist, beispielsweise ein Biegestreifen.

Eine derartige Ausbildung geht aus der WO2006042604 hervor. Hier wird eine verstellbare Lenksäule vorgestellt, bei der zur Energieaufzehrung bei der Verschiebung des Halteteils, das die Lenkspindel drehbar lagert, gegenüber der Konsole, die am Fahrzeug befestigt ist, eine U-förmig gebogene Biegelasche vorgesehen ist, die im Crashfall eine Energieabsorption durch die Biegung und durch ein zusätzliches Aufreissen entlang dafür vorgesehener Einkerbungen bewirkt. Damit die Energieabsorption tatsächlich über diese Einrichtung erfolgt, muss allerdings sichergestellt sein, dass die verstellbare Lenksäule sich nicht im Rahmen des möglichen Verstellbereichs verschiebt. Dafür muss die Feststelleinrichtung, mit der die gewünschte Position nach einer Verstellung arretiert wird, entsprechend ausgelegt sein. Entsprechend der W02006042604 ist hierfür eine zusätzliche Crash-Blockiereinrichtung vorgesehen. Dafür ist ein Klemmkeil vorgesehen, der im Crashfall in einen Spalt zwischen der Stelleinheit und der Trageinheit eingeschoben wird. Der Klemmkeil steht mit dem Spannbolzen oder mit einem sich mit diesem achsial mitbewegenden Teil in Verbindung und wird beim Schließen des Spannmechanismus zusammen mit dem Spannbolzen achsial verschoben, sodass eine Kontaktfläche des Klemmkeils an eine Anlagefläche der Stelleinheit angelegt wird, um den Klemmkeil im Crashfall bei einer einsetzenden Verschiebung der Stelleinheit von dieser mitzunehmen.

Aus der DE 10 2005 052 123 B3 geht weiters eine Energieabsorptionseinrichtung zur Absorption von Energie im Crashfall hervor, bei welcher ein an der Stelleinheit angebrachtes Arretierelement, mit dem im geschlossenen Zustand der zur Feststellung der eingestellten Position der Lenksäule dienenden Feststelleinrichtung ein Gegenarretierelement in Eingriff steht, derart mit der Stelleinheit verbunden ist, dass es im Crashfall unter Energieabsorption gegenüber der Stelleinheit in Längsrichtung der Lenksäule verschiebbar ist. Ein weiteres gegenüber der Stelleinheit unter Energieaufnahme verschiebbares Arretierelement einer Feststelleinrichtung ist aus der EP 1 464 560 A2 bekannt.

Aus der US 6,139,057 A geht eine verstellbare Lenksäule der eingangs genannten Art hervor. Auf dem Spannbolzen ist ein Feststellteil angeordnet, welches durch die Drehung des Spannbolzens beim Öffnen und Schließen des Spannmechanismus verdreht wird, wobei zwischen dem Spannbolzen und dem Feststellteil ein federelastisches Element wirkt. Im geschlossenen Zustand des Spannmechanismus greift eine Verzahnung des Feststellteils in eine Verzahnung eines Gegenfeststellteils ein, welches von einem an der Innenseite einer Seitenwange der Stelleinheit angeschweißten Rahmen gebildet wird. Im geöffneten Zustand des Spannmechanismus ist die Verzahnung des Feststellteils von der Verzahnung des Gegenfeststellteils abgehoben. Durch diese Vorrichtung wird eine zusätzliche Haltekraft gegen eine Längsverstellung der Lenksäule im Falle eines Fahrzeugcrashes aufgebracht. Gegen die Verstellung der Höhen- bzw. Neigungseinstellung im Falle eines Fahrzeugcrashes ist eine analog wirkende Vorrichtung vorhanden. Durch die aus dieser Schrift bekannte Vorrichtung wird der erforderliche Bauraum der Lenksäule vergrößert und die Zahnbreiten der zusammenwirkenden Verzahnungen können nur relativ klein ausgebildet sein, wodurch die zusätzliche Haltekraft der Crash-Blockiervorrichtung begrenzt wird.

Aus der US 2006/009 0586 A1 ist eine ähnlich wirkende Crash-Haltevorrichtung bekannt, welche nur gegen eine Verstellung der Lenksäule in die Höhen- bzw. Neigungsrichtung wirkt.

Die GB 2291840 A offenbart eine Lenksäule der eingangs genannten Art, bei der das Gegenfeststellteil fix an der Stelleinheit befestigt ist.

Aufgabe der Erfindung ist es, eine Lenksäule der eingangs genannten Art bereitzustellen, die bei einer Ausbildung mit einem relativ geringen Bauraum im Crashfall einen zuverlässigen Eingriff des Feststellteils in das Gegenfeststellteil ermöglicht. Erfindungsgemäß gelingt dies durch eine Lenksäule mit den Merkmalen des Anspruchs 1.

Dadurch, dass das Gegenfeststellteil an einer parallel zur Achse des Spannbolzens liegenden Wand, insbesondere der oberen oder unteren Seitenwand, der Stelleinheit angeordnet ist oder von dieser gebildet wird, kann bei einer platzsparenden Ausbildung der Lenksäule dennoch eine relativ große Eingriffsbreite zwischen dem Feststellteil und dem Gegenfeststellteil ausgebildet werden. Beim Öffnen und Schließen des Spannmechanismus, der im geschlossenen Zustand einer Verstellung der Stelleinheit gegenüber der Trageinheit entgegenwirkt, wird der Spannbolzen um seine Achse verdreht und mit ihm das, vorzugsweise auf oder am Spannbolzen angeordnete, Feststellteil. Im geöffneten Zustand ist das Feststellteil vom Gegenfeststellteil distanziert, also außer Eingriff gebracht. Im geschlossenen Zustand des Spannmechanismus wird das Feststellteil, vorzugsweise federnd, in Kontakt mit dem Gegenfeststellteil gebracht.

In einer bevorzugten Ausführungsform greift das Feststellteil in das Gegenfeststellteil nach dem Schließen des Spannmechanismus entweder direkt formschlüssig ein oder steht das Feststellteil zunächst nur reibschlüssig in Kontakt mit dem Gegenfeststellteil. Im letzteren Fall wird jedoch durch den federnden Kontakt das Feststellteil bei einer beginnenden Verschiebung der Stelleinheit gegenüber der Trageinheit, wie sie bei Überschreitung der Haltekraft des Spannmechanismus, beispielsweise im Falles eines Fahrzeugcrashs erfolgen kann, in einen formschlüssigen Eingriff mit dem Gegenfeststellteil gebracht. Dabei kann der maximale Wert der möglichen Verschiebung bis zum Erreichen des formschlüssigen Eingriffs definiert werden.

Hierzu werden mit Vorteil in das Gegenfeststellteil mehrere Eingriffselemente, im einfachsten Fall Aussparungen, eingebracht, in die ein Formelement, beispielweise eine Nase, des Feststellteils eingreifen kann. Der Abstand der Aussparungen definiert den maximal möglichen Verschiebeweg bis zum formschlüssigen Eingriff zwischen Feststell- und Gegenfeststellteil.

Von Vorteil ist dabei, dass eine Vielzahl von im Stand der Technik bekannter Möglichkeiten zur Ausbildung des Spann- und Klemmechanismus bzw. des Spannmechanismus, mit dem die Trageinheit gegenüber der Stelleinheit verriegelt wird, einsetzbar sind. Die Verriegelung kann dabei sowohl über einen Formschluss, beispielsweise über eine Verzahnung, als auch über einen Reibschluss erfolgen. Auch die Ansteuerung des Spannmechanismus kann über die bekannte Kombination aus Keilscheibe und Nockenteil erfolgen oder auch über Wälzkörper, die entlang vorgegebener Bahnen rollen und eine entsprechende Verspannung des Spannsystems ermöglichen. Entscheidend ist, dass ein Spannbolzen vorhanden ist, der quer zur Verschieberichtung der Stelleinheit gegenüber der Trageinheit ausgerichtet ist und beim Wechsel von der Stellung, in der die Verschiebung der Trageinheit gegenüber der Stelleinheit ermöglicht ist, in die Stellung, in der die Verschiebung der Trageinheit gegenüber der Stelleinheit blockiert ist, eine Drehbewegung um seine eigene Achse ausführt. Diese Drehbewegung wird dazu genutzt, das Feststellteil in die Bereitschaftsstellung oder aus der Bereitschaftsstellung heraus zu verstellen.

Gemäß der Erfindung ist vorgesehen, dass das Gegenfeststellteil im Falle eines Fahrzeugcrashes unter Energieaufzehrung gegenüber der Stelleinheit verschiebbar ist. Es liegt also eine unter Energieaufnahme verschiebbare Verbindung des Gegenfeststellteils mit der Stelleinheit vor. Dabei ist die der Verschiebung entgegenwirkende Kraft viel größer, vorzugsweise mehr als eine Größenordnung größer, als die übliche zur Längsverstellung der Stelleinheit gegenüber der Trageinheit im geöffneten Zustand des Spannmechanismus erforderliche Kraft. Wenn im Crash-Fall die Haltekraft des Spannmechanismus überwunden wird und auf das Gegenfeststellteil eine Kraft einwirkt, die die Kraft überschreitet, weiche der Verschiebung des Gegenfeststellteils entgegenwirkt, so kann das Gegenfeststellteil unter Energieaufzehrung gegenüber der Stelleinheit verschoben werden. Das Gegenfeststellteil und die Stelleinheit sind somit separate Teile.

Vorzugsweise ist die unter Energieaufnahme verschiebbare Verbindung des Gegenfeststellteils mit der Stelleinheit derart ausgelegt, dass die einer Verschiebung der Stelleinheit gegenüber der chassisfesten Trageinheit bzw. dem Fahrzeugchassis entgegenwirkenden Kräfte im Bereich von 500N bis 10000N liegen. Durch diese Kräfte werden auch gegebenenfalls weitere vorhandene -insbesonders reibschlüssig wirkende - Haltekräfte des Spannmechanismus überwunden. Sind die Kräfte in dieser Größenordnung, so ist die Verletzungsgefahr für den Fahrer minimiert. Zur Optimierung sind dabei spezielle vorgegebene oder einstellbare Kraftverläufe über den Verschiebeweg gewünscht, die im Idealfall sogar während des Crashs einstellbar sein können.

In einer vorteilhaften Ausbildung ist das Gegenfeststellteil als etwa U-förmig gebogenes Blechelement mit zwei Schenkeln ausgebildet. Das Blechelement ist in Einbaulage so ausgerichtet, dass der bogenförmige Abschnitt des Blechelements ist in Richtung zum Fahrer, bzw. zum lenkradseitigen Ende der Lenkspindel hin angeordnet ist. Ein erster Schenkel, auch als Lasche bezeichnet, ist als Blechstreifen ausgebildet und umfasst mehrere Eingriffselemente. Ein zweiter Schenkel ist mit der Stelleinheit, die direkt oder indirekt die Lenkspindel drehbar lagert, verbunden und weist zwei zueinander und zum anderen Schenkel parallele Schwächungslinien, beispielsweise Einkerbungen, zwischen denen eine Aufreißlasche gebildet ist, auf. Im Fall, dass das Spannsystem geschlossen ist und eine Verschiebung der Stelleinheit gegenüber der Trageinheit erfolgt, wird durch den Formschluss zwischen einem Eingriffselement und dem Formschlusselement die Lasche verschoben, so dass der der Bogenabschnitt sich ebenfalls verschiebt und die Aufreißlasche aus dem zweiten Schenkel herausgerissen wird. Durch die Vielzahl von Eingriffselementen ist der Kraft-Wegverlauf und der gesamte für die Energieaufzehrung zur Verfügung stehende Weg immer gleich, unabhängig von der Verstellposition der Stelleinheit gegenüber der Trageinheit. Anstelle einer Aufreißlasche könnte auch eine reine Biegelasche oder eine Kombination hiervon vorgesehen sein. Mit dieser bevorzugten Ausführungsform sind eine Reihe von Vorteilen verbunden. So wird kaum zusätzlicher Bauraum benötigt. Insbesondere muss der Spannbolzen nicht verlängert werden und die Lenksäule nicht breiter gebaut werden. Auch ist der Eingriff in das Spannsystem minimal und die Montage einfach. Mit Hilfe dieser Ausführung sind zwei Funktionen kombiniert. Beim Stand der Technik, beispielsweise der WO2006042604 A1, ist zwischen der Stelleinheit und der Trageinheit ein Schlitten vorgesehen. Zur Komfort-Verstellung der Lenksäule wird die Stelleinheit gegenüber dem Schlitten verstellt. Zur kontrollierten Energieabsorption im Crashfall wird der Schlitten gegenüber der Trageinheit über zwischengeschaltete Energieabsorptionsmittel verschoben. Dabei muss sichergestellt sein, dass während der Energieabsorption keine unkontrollierte Verschiebung der Stelleinheit gegenüber dem Schlitten erfolgt. In der Ausführungsform der Erfindung sind beide Funktionen in einem Element, dem U-förmig gebogenen Blechelement, vereinigt. Weiter ist ein Schlitten, zumindest für rein längenverstellbare Lenksäulen, nicht erforderlich.

Eine erfindungsgemäße Lenksäule kann nur längsverstellbar oder zusätzlich zur Längsverstellbarkeit auch in der Höhe bzw. Neigung verstellbar sein. Beispielsweise kann der Spannbolzen zu diesem Zweck Langlöcher in den Seitenwangen der Trageinheit durchsetzen, welche sich in Richtung der Höhen- bzw. Neigungsverstellung erstrecken. Denkbar und möglich ist es, dass eine Zwischeneinheit vorgesehen ist, welche gegenüber der Trageinheit in Richtung der Höhen- bzw. Neigungsverstellung verstellbar ist, wobei die Stelleinheit gegenüber der Zwischeneinheit in Längsrichtung der Lenksäule bzw. Lenkspindel verstellbar ist. Derartige Konstruktionen sind bekannt. In einer anderen Ausführungsform kann die Zwischeneinheit entfallen und die Seitenwangen der Trageinheit können im geschlossenen Zustand des Spannmechanismus direkt mit der Stelleinheit verspannt sein, wie dies ebenfalls bereits bekannt ist.

Die Trageinheit wird in einer möglichen Ausführungsform starr am Chassis des Kraftfahrzeugs befestigt. In einer anderen Ausführungsform ist die Trageinheit an einer Chassiseinheit, welche wiederum starr am Chassis des Kraftfahrzeugs befestigbar ist, gehalten, wobei sie im Normalbetrieb gegenüber der Chassiseinheit unverschiebbar ist und im Crashfall (=bei Überschreiten eines Schwellenwerts der einwirkenden Kraft) gegenüber der Chassiseinheit in Richtung zur Fahrzeugfront verschiebbar ist. Hierbei können vorteilhafterweise energieaufzehrende Mittel, beispielsweise mindestens ein Biegestreifen, zwischen der Trageinheit und der Chassiseinheit vorgesehen sein. Derartige Konstruktionen sind bekannt.

Weitere Vorteile und Einzelheiten der Erfindung werden im Folgenden anhand der beiliegenden Zeichnung erläutert. In dieser zeigen:
Fig. 1 ein erstes Ausführungsbeispiel einer Lenksäule gemäß der Erfindung in Schrägsicht;
Fig. 2 eine Schrägsicht eines spannbolzens mit dem darauf angeordneten Feststellteil;
Fig. 3 eine Schrägsicht des Gegenfeststellteils;
Fig. 4 das auf einem Spannbolzen angeordnete Feststellteil im Eingriff mit dem Gegenfeststellteil;
Fig. 5 einen Teil der Lenksäule in Seitenansicht, teilweise aufgeschnitten, in der Schließstellung des Betätigungshebels;
Fig. 6 eine Ansicht entsprechend Fig. 5, aber in der Offenstellung des Betätigungshebels;
Fig. 7 eine Schrägsicht einer Lenksäule gemäß einem zweiten Ausführungsbeispiel der Erfindung;
Fig. 8a und b Schrägsichten des Spannbolzens mit dem Feststellteil gemäß dieser zweiten Ausführungsform der Erfindung;
Fig. 9 eine Schrägsicht des Gegenfeststellteils;
Fig. 10 das auf dem Spannbolzen angeordnete Feststellteil in Eingriff mit dem Gegenfeststellteil;
Fig. 11und 12 Seitenansichten von Teilen der Lenksäule gemäß der zweiten Ausführungsform, teilweise aufgeschnitten, in der Schließstellung und Offenstellung des Betätigungshebels;
Fig. 13 einen Teil einer Schrägsicht einer Lenksäule gemäß einer dritten Ausführungsform, ein Teil der Stelleinheit der Übersichtlichkeit halber entfernt und das Gegenfeststellteil in der Längsmitte aufgeschnitten;
Fig. 14 eine Schrägsicht einer Lenksäule gemäß einer vierten Ausführungsform;
Fig. 15 einen Teil einer Seitenansicht der Lenksäule gemäß dieser vierten Ausführungsform, teilweise aufgeschnitten;
Fig. 16 eine Draufsicht auf die Lenksäule gemäß der vierten Ausführungsform;
Fig. 17 eine Schrägsicht eines Gegenfeststellteils gemäß einer modifizierten Ausführungsform;
Fig. 18 eine Schrägsicht eines Gegenfeststellteils gemäß einer weiteren modifizierten Ausführungsform;
Fig. 19 eine Schrägsicht eines Gegenfeststellteils gemäß einer weiteren modifizierten Ausführungsform;
Fig. 20 ein Teil einer Schrägsicht einer Lenksäule gemäß einer Variante der dritten Ausführungsform, ein Teil der Stelleinheit der Übersichtlichkeit halber entfernt und das Gegenfeststellteil in der Längsmitte aufgeschnitten.

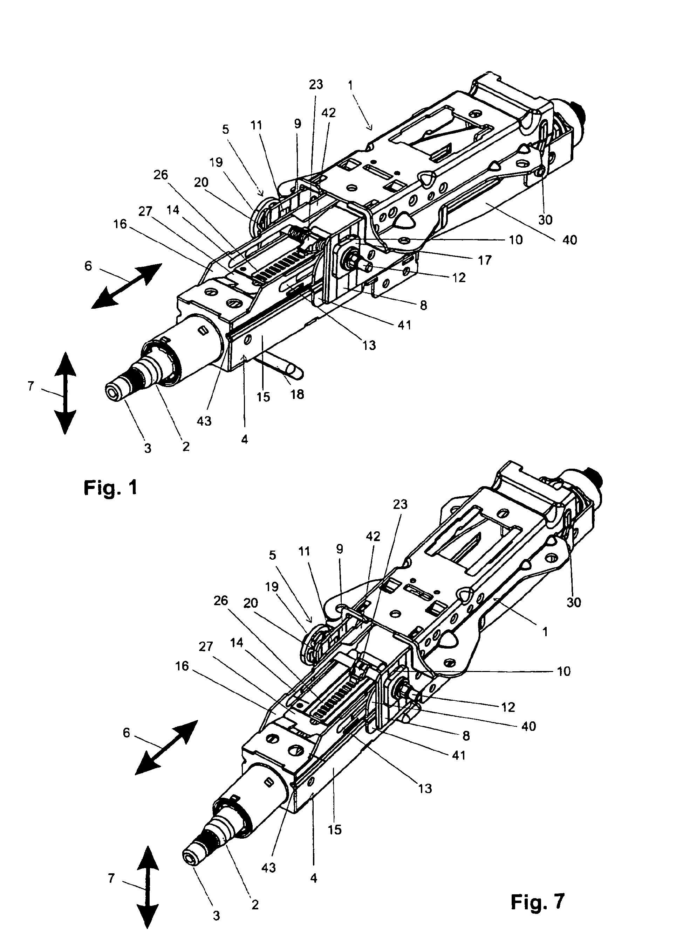

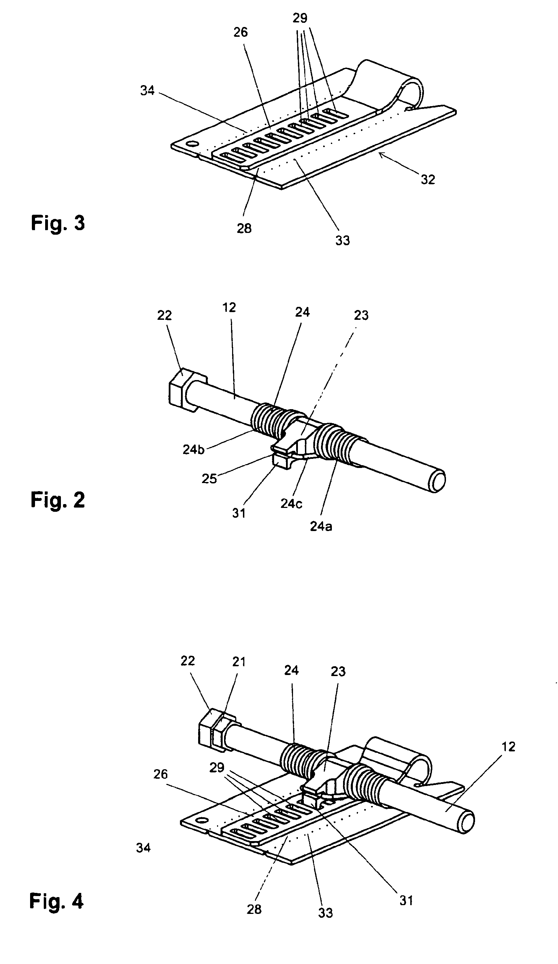

Ein erstes Ausführungsbeispiel einer Lenksäule gemäß der Erfindung ist in den Fig. 1 bis 6 dargestellt, wobei die Figuren 2 und 4 Varianten des Spannbolzens 12 zu diesem Ausführungsbeispiel veranschaulichen.

Die Lenksäule umfasst eine Trageinheit 1, die am Chassis eines Kraftfahrzeugs befestigbar ist. Eine Lenkspindel 2, an deren lenkradseitigen Ende 3 ein Lenkrad anbringbar ist, ist von einer Manteleinheit bzw. Stelleinheit 4 drehbar gelagert, welche von der Trageinheit 1 getragen wird. Im geöffneten Zustand eines Spannmechanismus 5 ist die Lenksäule in ihrer Längsrichtung 6 (= achsiale Richtung der Lenkspindel 2) und in Richtung 7 der Höhe bzw. Neigung verstellbar. Hierbei ist die Stelleinheit 4 gegenüber der Trageinheit 1 in die Längsrichtung 6 und in die Richtung 7 der Höhen- bzw. Neigungsverstellung verstellbar.

Die Stelleinheit 4 ist zwischen Seitenwangen 8, 9 der Trageinheit 1 angeordnet, in Öffnungen 10, 11 angeordnet sind, welche in Form von in Richtung 7 der Höhen- bzw. Neigungsverstellung sich erstreckenden Langlöchern ausgebildet sind und welche von einem Spannbolzen 12 des Spannmechanismus 5 durchsetzt werden. Der Spannbolzen 12 durchsetzt weiters in Form von in die Längsrichtung 6 sich erstreckenden Langlöchern ausgebildete Öffnungen 13, 14 in Seitenwangen 15, 16 der Stelleinheit 4.

Der Spannbolzen 12 wird durch die Ränder der von ihm durchsetzten Öffnungen 10, 11 in den Seitenwangen 8, 9 der Trageinheit 1 in einer jeweiligen eingestellten Höhen- bzw. Neigungsposition der Lenksäule in Längsrichtung der Lenksäule unverschiebbar gehalten.

Zwischen der Trageinheit 1 und der Stelleinheit 4 ist im gezeigten Ausführungsbeispiel eine Zwischeneinheit 40 angeordnet. Diese weist Seitenwangen 41, 42 auf, die zwischen der jeweiligen Seitenwange 8, 9 der Trageinheit 1 und der Stelleinheit 4 angeordnet sind. Der Spannbolzen 12 durchsetzt Rundlöcher in den Seitenwangen 41, 42. Die Zwischeneinheit 40 ist gegenüber der Trageinheit 1 um eine Schwenkachse 30 in die Richtung 7 der Höhen- bzw. Neigungsverstellung verschwenkbar. In Längsrichtung 6 der Lenksäule sind die Seitenwangen 41, 42 gegenüber der Stelleinheit 4 durch vorspringende Stege geführt, die in Längsnuten 43 an den Seitenflächen der Stelleinheit 4 eingreifen.

Im geschlossenen Zustand des Spannmechanismus werden die Seitenwangen 8, 9 der Trageinheit 1 beidseitig gegen die Seitenwangen 41, 42 der Zwischeneinheit 40 und diese gegen die Stelleinheit 4 verspannt, wobei die zusammenwirkenden Reibflächen reibschlüssig wirkende Arretierelemente des spannmechanismus darstellen. Auf dem Spannbolzen angeordnete, gegen die Außenseiten der Seitenwangen 8, 9 angedrückte Andruckteile 17 bilden weitere mit den Seitenwangen 8, 9 zusammenwirkende Reibflächen aus, wodurch weitere reibschlüssig wirkende Arretierelemente der Spanneinrichtung gebildet werden. Prinzipiell denkbar und möglich wäre es, weitere Reibflächen durch zusammenwirkende Lamellen auszubilden, wie dies bekannt ist.

Zum Öffnen und Schließen des Spannmechanismus dient ein Betätigungshebel 18, durch dessen Verschwenkung in bekannter Weise eine mit einer Gegenscheibe 19 (=Keilscheibe) zusammenwirkende Nockenscheibe 20 verdreht wird, wobei beim Schließen des Spannmechanismus die beiden Scheiben 19, 20 auseinandergespreizt werden.

Die Arretierelemente des Spannmechanismus 5 werden somit durch eine achsiale Verschiebung des Spannbolzens 12 bzw. durch eine achsiale Verschiebung gegenüber dem Spannbolzen 12 miteinander in Eingriff gebracht.

Anstelle eines Betätigungshebels 18 könnte auch eine andere Betätigung, beispielsweise elektrische Betätigung des Spannmechanismus vorgesehen sein. Anstelle einer Keil- oder Nockenscheibe 20 könnte auch ein anderer Mechanismus zur achsialen Verschiebung des Spannbolzens 12 bzw. zur achsialen Verschiebung von Arretierelementen gegenüber dem Spannbolzen 12 vorgesehen sein.

Der Betätigungshebel 18 ist mittels eines als Mehrkant ausgebildeten Flächenansatzes 21 des Spannbolzens 12, wie er in Figur 4 veranschaulicht ist, drehfest mit dem Spannbolzen 12 verbunden. Statt dessen könnte der Betätigungshebel 18 zur drehfesten Verbindung mit dem Spannbolzen 12 beispielsweise auch den Bolzenkopf 22 des Spannbolzens 12 übergreifen, mit dem Spannbolzen 12 verschweißt sein oder über eine Rollierung oder ein Rändel am Spannbolzen 12 durch einen Presssitz mit diesem verbunden sein. Ein entsprechender Spannbolzen 12 ohne zusätzlich ausgebildeten Flächenansatz 21 ist in Figur 2 veranschaulicht.

Durch die drehfeste Verbindung des Betätigungshebels 18 mit dem Spannbolzen 12 wird dieser beim Öffnen und Schließen des Spannmechanismus um seine Achse gedreht.

Auf dem Spannbolzen 12 ist ein Feststellteil 23 angeordnet. Dieses befindet sich im Bereich zwischen den Seitenwangen 8, 9 der Trageinheit 1. Das Feststellteil 23 ist gegenüber dem Spannbolzen 12 um dessen Achse verschwenkbar auf dem Spannbolzen 12 angeordnet, günstigerweise indem wie dargestellt der Spannbolzen 12 eine Öffnung im Feststellteil 23 durchsetzt.

Auf dem Spannbolzen 12 ist weiters ein Federelement 24 angeordnet. Dieses weist beidseitig des Feststellteils 23 den Spannbolzen 12 schraubenfederartig umgebende Abschnitte 24a, 24b und einen diese verbindenden Bügelabschnitt 24c auf, wobei die Abschnitte 24a, 24b, 24c aus einem durchgehenden Federdraht bestehen. Die Abschnitte 24a, 24b sind unverdrehbar mit dem Spannbolzen 12 verbunden, beispielsweise klemmend, durch Formschluss oder durch Stoffschluss, z.B. Verklebung oder Punktverschweißung. Der Bügelabschnitt 24c erstreckt sich durch eine Nut 25 im Feststellteil 23.

Dadurch wird das Feststellteil 23 ohne einwirkende äußere Kraft in einer bestimmten Winkellage gegenüber dem Spannbolzen 12 gehalten und ist gegen die Rückstellkraft des Federelements 24 aus dieser auslenkbar.

An der Stelleinheit 4 ist weiters ein Gegenfeststellteil 26 gehalten, und zwar an der parallel zur Achse des Spannbolzens 12 liegenden oberen Seitenwand 27 der Stelleinheit 4. Das Gegenfeststellteil 26 weist eine Lasche mit einer Mehrzahl von in Längsrichtung 6 der Lenksäule bzw. Lenkspindel 2 mit jeweiligem Abstand aufeinanderfolgenden Eingriffselementen 29 auf diese Eingriffselemente 29 sind zum formschlüssigen Eingriff des Feststellteils 23 vorgesehen. Im gezeigten Ausführungsbeispiel werden diese Eingriffselemente 29 von durch das Material der Lasche durchgehenden, schlitzförmigen Ausnehmungen gebildet, in welche eine vorspringende Nase 31 des Feststellteils 23 einführbar ist. Die Ausnehmungen könnten beispielsweise auch in Form von nutartigen Vertiefungen oder einfach als gestanzte Löcher ausgeführt sein.

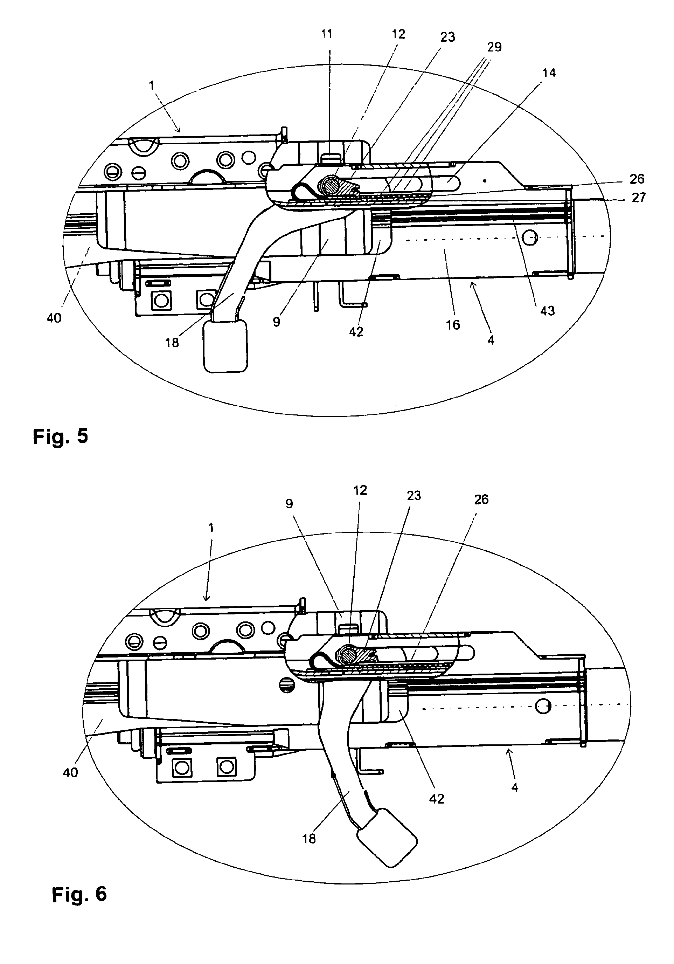

Im geöffneten Zustand des Spannmechanismus 5 ist das Feststellteil 23 vom Gegenfeststellteil 26 abgehoben, vgl. Fig. 6. Durch die Verdrehung des Spannbolzens 12 beim Schließen des Spannmechanismus 5 wird das Feststellteil 23 an das Gegenfeststellteil 26 angedrückt. Hierbei können zwei Fälle auftreten: Einerseits kann die gegenseitige Lage zwischen Feststellteil 23 und Gegenfeststellteil 26 (aufgrund der momentanen Einstellposition der Lenksäule in Längsrichtung) gerade so sein, dass das Feststellteil 23 in eines der Eingriffselemente 29 eingreift, sodass sofort ein formschlüssiger Eingriff zwischen dem Feststellteil 23 und Gegenfeststellteil 26 ausgebildet wird. Andererseits kann die Nase 31 auf einen Steg zwischen zwei aufeinanderfolgenden Eingriffselementen 29 zu liegen kommen. In diesem Fall wird das Feststellteil 23 durch die Federkraft des Federelements 24 an das Gegenfeststellteil 26 angedrückt. Sollte es in der letztbeschriebenen Lage des Feststellteils 23 zu einem Fahrzeugcrash kommen, durch den die von den Arretierelementen des Spannmechanismus 5 bewirkte Haltekraft der Stelleinheit 4 gegenüber der Trageinheit 1 überschritten wird, so würde eine Verschiebung der Stelleinheit 4 gegenüber der Trageinheit 1 einsetzen, bis die Nase 31 in den Bereich oberhalb eines Eingriffselements 29 gelangt, worauf sie durch die Federkraft des Federelements 24 in Eingriff mit dem Eingriffselement 29 gebracht wird.

Entweder gleich nach dem Schließen des Spannmechanismus 5 oder zumindest nach einer anfänglichen geringen Verschiebung der Stelleinheit 4 gegenüber der Trageinheit 1, welche kleiner als der Abstand von zwei aufeinanderfolgenden Eingriffselementen 29 ist, kommt es somit im Crashfall zu einem formschlüssigen Eingriff des Feststellteils 23 mit dem Gegenfeststellteil 26.

Im Ausführungsbeispiel gemäß den Fig. 1 bis 6 ist das laschenförmig ausgebildete Gegenfeststellteil 26 derart mit der Stelleinheit 4 verbunden, dass es unter Energieaufzehrung gegenüber der Stelleinheit 4 in Längsrichtung 6 der Lenksäule bzw. Lenkspindel 2 verschiebbar ist. Hierzu ist ein Schenkel des U-förmigen Gegenfeststellteils 26 über eine Umbiegung mit einer Aufreißplatte 32 verbunden, welche ihrerseits starr mit der Seitenwand 27 der Stelleinheit 4 verbunden ist. Die Aufreißplatte 32 könnte auch einen Abschnitt der Seitenwand 27 der Stelleinheit bilden.

Die Aufreißplatte 32 weist, beispielsweise durch Einstanzungen gebildete Schwächungslinien 33, 34 auf, die in Fig. 3 und 4 durch strichlierte Linien angedeutet sind. Dadurch wird eine Aufreißlasche 28 abgegrenzt. Durch einen ausreichend starken Zug am laschenförmigen Gegenfeststellteil 26 kann die Aufreißlasche 28 entlang der Schwächungslinien 33, 34 unter Energiedissipation mehr und mehr abgerissen werden, wobei sich eine das laschenartige Gegenfeststellteil 26 fortsetzende Lasche bildet. Zu einem weiteren Anteil von Energiedissipation kommt es durch die bei der Verschiebung der Stelle der Umbiegung geleistete Biegearbeit.

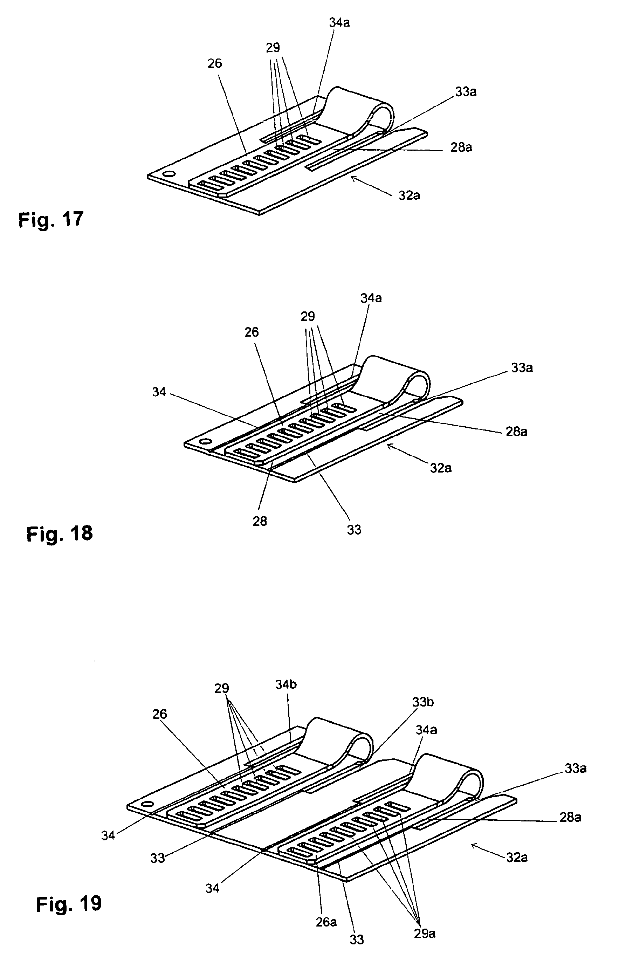

Anstelle der Ausbildung von Schwächungslinien 33, 34 kann die Lasche 28a zumindest teilweise als Biegelasche ausgebildet sein, die von der Grundplatte 32a durch Schlitze bzw. Langlöcher 33a, 34a in einem vorgesehenen Biegebereich getrennt ist (vgl. Fig. 17).

Darüber hinaus ist es denkbar und möglich, die beiden Energieabsorptionsmechanismen zu kombinieren und im Anschluss an die Langlöcher 33a, 34a entsprechende Schwächungslinien 33, 34 vorzusehen, die ein kontrolliertes Aufreißen der Aufreißlasche 28 nach Beendigung der reinen Biegeoperation der Lasche 28a zu ermöglichen (Fig. 18).

Wie in Fig. 19 veranschaulicht ist, können derartige Energieabsorptionselemente auch parallel auf einer Grundplatte angeordnet sein, wobei bei jedem Energieabsorptionselement reine Biegeumformungen oder Biegeumformungen mit anschließenden Zerspanungs-/ Aufreißoperationen oder reine Aufreißoperationen vorgesehen sein können und bei den einzelnen Energieabsorptionselementen gleiche oder unterschiedliche Energieabsorptionsmechanismen eingesetzt werden können. Dabei ist es möglich zwei Energieabsorptionselemente oder mehr Energieabsorptionselemente parallel auf einer einzigen Aufreißplatt 32 bzw. Grundplatte 32a vorzusehen oder auf separaten nebeneinander angeordneten Aufreiß- bzw. Grundplatten vorzusehen.

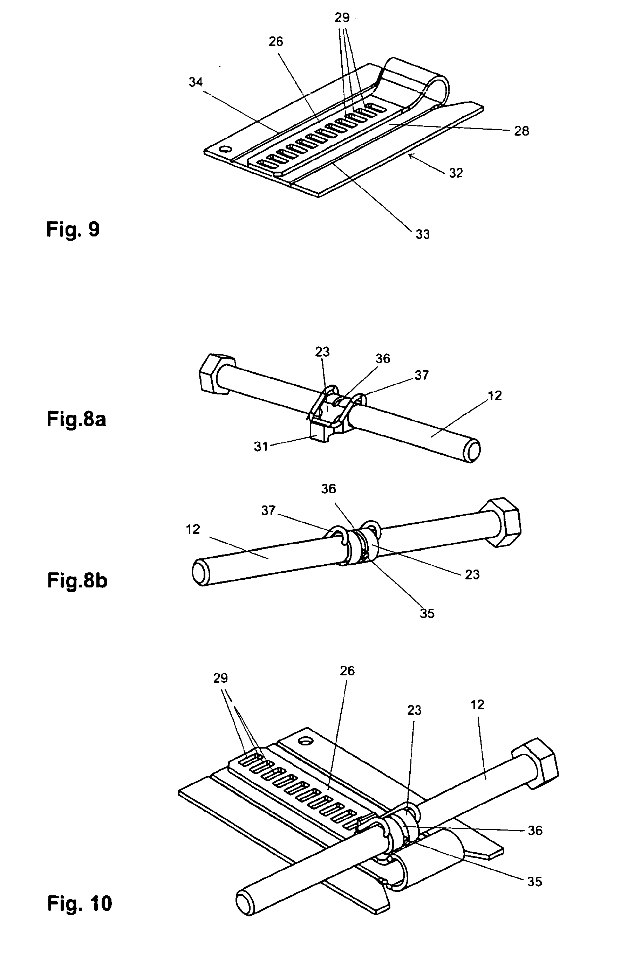

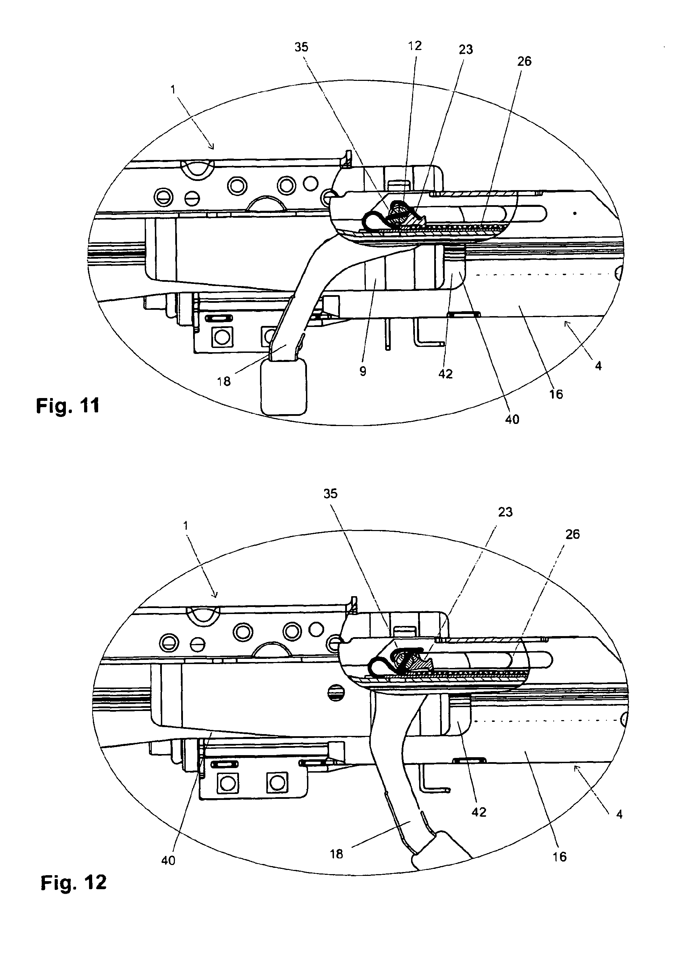

Ein zweites Ausführungsbeispiel der Erfindung ist in den Fig. 7 bis 12 dargestellt. Der Unterschied zum zuvor beschriebenen Ausführungsbeispiel besteht vor allem in der Art der Verbindung des Feststellteils 23 mit dem Spannbolzen 12. Das Feststellteil 23 ist wiederum verschwenkbar auf dem Spannbolzen 12 angeordnet. Der Spannbolzen ist mit einem außen radial vorstehenden Stift 35 versehen, der in einen Schlitz 36 im Feststellteil 23 eingreift und bei einer Verschwenkung des Feststellteils 23 gegenüber dem Spannbolzen 12 sich in diesem verschiebt. Weiters ist am Spannbolzen 12 ein Federelement 37 in Form einer Bügelfeder angebracht, wobei Enden des Federdrahtes in radiale Bohrungen des Spannbolzens 12 ragen. Im geschlossenen Zustand des Spannmechanismus 5 drückt das sich über das Feststellteil 23 erstreckende Federelement 37 das Feststellteil 23 gegen das Gegenfeststellteil 26 (vgl. Fig. 10 und 11). Wenn der Spannbolzen 12 beim Öffnen des Spannmechanismus 5 gedreht wird (vom dem Bolzenkopf 22 gegenüberliegenden Ende aus gesehen im Uhrzeigersinn) so wird der Stift 35 mitverschwenkt und läuft an ein Ende des Schlitzes 36 an (dieses liegt in Fig. 8b etwas unterhalb des Stifts 35), worauf das Feststellteil 23 verschwenkt und vom Gegenfeststellteil 26 abgehoben wird.

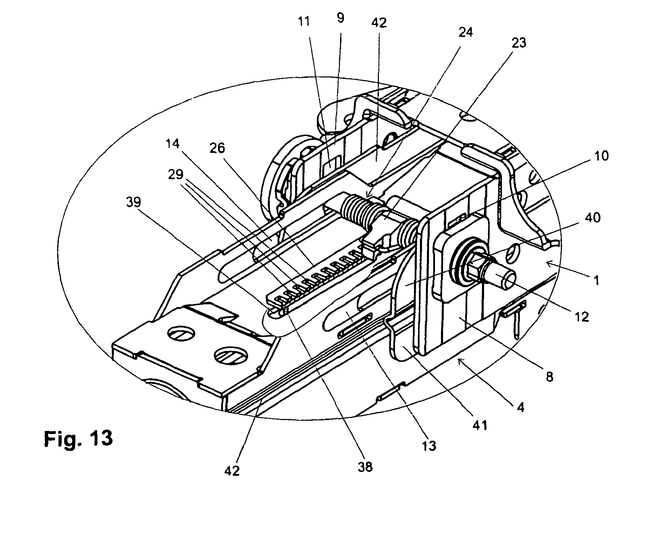

Auch andere Verbindungen des Gegenfeststellteils 26 mit der Stelleinheit 4, durch welche das Gegenfeststellteil 26 im Falle eines Fahrzeugcrashes unter Energieaufzehrung gegenüber der Stelleinheit 4 verschiebbar ist, sind denkbar und möglich. Fig. 13 zeigt beispielhaft eine Ausführungsform, bei weicher an der vom Feststellteil 23 abgewandten Seite des Gegenfeststellteils 26 ein Bolzen 38 angebracht ist, der in ein sich in die Längsrichtung 6 erstreckendes Langloch 39 in der Seitenwand 27 der Stelleinheit 4 erstreckt. Der Bolzen 38 befindet sich im Ausgangszustand in einem vergrößerten Bereich des Langlochs 39. Bei einer Verschiebung des Bolzens 38 gegenüber dem Langloch 39 kommt es zu einer Aufweitung des Langlochs 39, wodurch Energie aufgezehrt wird.

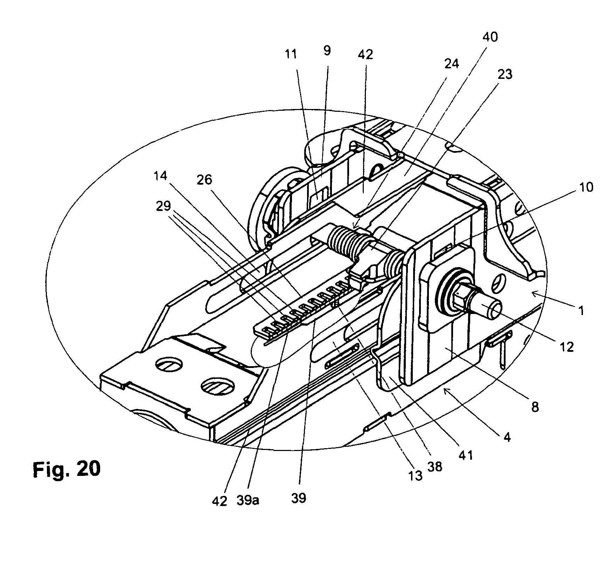

In eine Variante zu dieser Ausführungsform, die in Fig. 20 veranschaulicht ist, schliesst sich an das Langloch 39 ein Streifenbereich 39a an, der beim Einfahren des Bolzens 38 aufgetrennt wird. Auf diese Weise kann in einem ersten Abschnitt ein erstes Energieabsorptionsniveau mittels Aufweitung des Langlochs 39 und in einem zweiten Abschnitt ein zweites Energieabsorptionsniveau mittels der Auftrennung des Streifenbereichs 39a gezielt eingestellt werden. Es ist auch naheliegende die Breite des Langlochs über den Verschiebeweg des Bolzens entsprechend dem gewünschten Verlauf der Energieabsorption zu variieren. So kann die Breite beispielsweise kontinuierlich gegen das Ende des Crashwegs verkleinert werden, um eine progressive Energieasorption zu erreichen.

Alternativ kann der Streifenbereich 39a auch als Langloch mit sehr schmaler Breite, beispielsweise weniger als die Hälfte des Durchmessers, bzw. der Dicke des Bolzens 38, dargestellt sein.

Es ist auch denkbar und möglich, auf die Aufweitung eines Langlochs 39 völlig zu verzichten und die Energieabsorption ausschliesslich durch die Auftrennung eines Streifenbereichs 39a darzustellen. Mit Vorteil ist auf der Ober- oder/und Unterseite des Streifenbereichs 39a eine Längsrille angeordnet. Zur Einstellung des Energieabsorptionsniveaus ist die Rille in ihrer Tiefe und/oder Breite entsprechend dimensioniert.

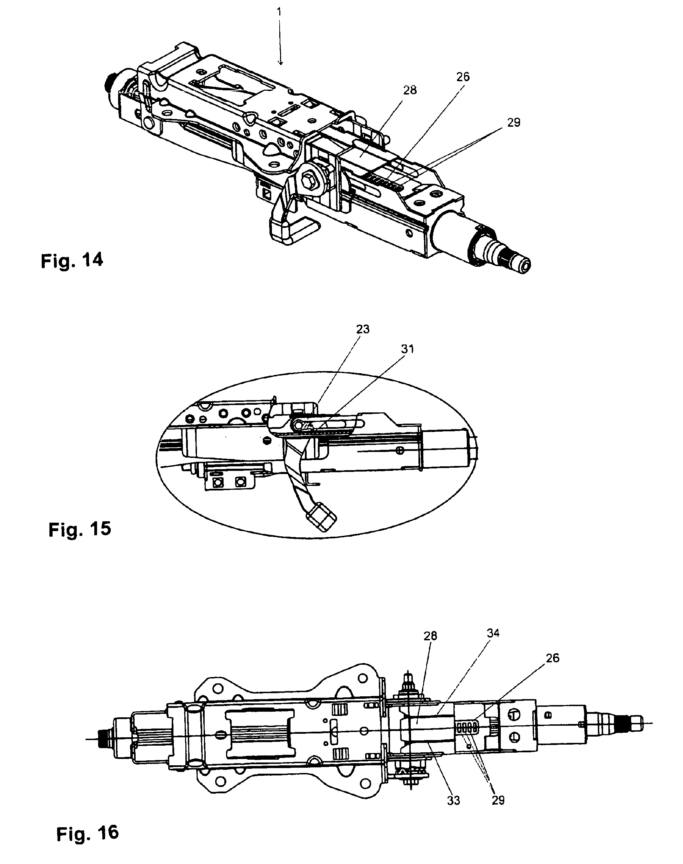

Beim in den Fig. 14 bis 16 dargestellten Ausführungsbeispiel umgreift das U-förmig ausgebildete Gegenfeststellteil 26 das Feststellteil 23. Der die Eingriffselemente 29 aufweisende Abschnitt liegt an der oberen Seitenwand der Stelleinheit 4 an. Die Aufreißplatte mit der Aufreißlasche 28 ist an der von der Lenkspindel abgewandten Seite des Spannbolzens 12 an der Stelleinheit 4 befestigt.

Anstelle einer Aufreißlasche 28 könnte wiederum beispielsweise eine Biegelasche oder eine Kombination aus einer Biege- und Aufreißlasche vorgesehen sein.

In den verschiedenen zuvor beschriebenen Ausführungsformen ist das Gegenfeststellteil 26 jeweils an der oberen Seitenwand 27 der Stelleinheit 4 angeordnet. Stattdessen könnte das Gegenfeststellteil auch an einer anderen parallel zur Achse des Spannbolzens 12 liegenden Wand der Stelleinheit 4 angeordnet sein, beispielsweise von der unteren Seitenwand.

Die Eingriffselemente 29 des Gegenfeststellteils 26 könnten auch anders als in Form von Ausnehmungen ausgebildet sein, wobei das Feststellteil ein angepasstes Eingriffselement aufweist, um einen bezogen auf die Längsrichtung 6 der Lenksäule bzw. Lenkspindel 2 unverschiebbaren Eingriff, insbesondere formschlüssigen Eingriff, zwischen dem Feststellteil 23 und Gegenfeststellteil 26 zu ermöglichen. Hierbei wäre wieder eine über die in die Längsrichtung 6 verlaufende Längserstreckung des Gegenfeststellteils 26 eine Mehrzahl von Eingriffspositionen für das Feststellteil 23 vorhanden. Beispielsweise könnten die Eingriffselemente 29 des Gegenfeststellteils 26 auch von Zähnen einer Verzahnung gebildet werden und das Feststellteil 23 mit einer entsprechenden Gegenverzahnung ausgebildet sein.

Die zwischen der Trageinheit 1 und der Stelleinheit 4 in den dargestellten Ausführungsbeispielen vorhandene Zwischeneinheit 40 könnte auch entfallen. Die Seitenwangen 8, 9 der Trageinheit 1 könnten dann im geschlossenen Zustand des Spannmechanismus 5 direkt an die Stelleinheit 4 beidseitig angedrückt sein. Die Schwenkachse zwischen der Stelleinheit 4 und der Trageinheit 1 könnte in diesem Fall beispielsweise auch von einem Kardangelenk gebildet werden, über welches die Lenkspindel 2 mit einem weiteren Abschnitt der Lenkspindel verbunden ist. Weiters könnte diese Schwenkachse auch von einem an der Trageinheit 1 angebrachten Schwenkbolzen gebildet werden, der ein sich in die Längsrichtung 6 erstreckendes Langloch in der Stelleinheit 4 durchsetzt.

Die Erfindung ist auch bei Lenksäulen einsetzbar, die nur in Längsrichtung 6 verstellbar sind. Der Spannbolzen 12 könnte dann in Form von Rundlöchern ausgebildete Öffnungen 10, 11 in den Seitenwangen 8, 9 der Trageinheit 1 durchsetzen.

Die über die obere Seitenwand 27 vorstehenden Abschnitte der Seitenwangen 15, 16 der Stelleinheit 4 könnten auch entfallen, sodass der Spannbolzen 12 keine Öffnungen 13, 14 in der Stelleinheit 4 durchsetzt.

Denkbar und möglich wäre es auch, dass das Feststellteil 23 unverschwenkbar mit dem Spannbolzen 12 verbunden ist und beispielsweise selbst federelastisch ausgebildet ist. Weiters könnte beispielsweise eine Ausführung vorgesehen sein, bei der ein Feststellteil 23 unverschwenkbar mit dem Spannbolzen 12 verbunden ist und beim Öffnen und Schließen des Spannmechanismus 5 ein Antriebselement, beispielsweise der Betätigungshebel 18, direkt auf ein Spannteil, beispielsweise die Keil- oder Nockenscheibe 20, einwirkt und dieses verdreht. Der Spannbolzen 12 könnte durch die Drehung des Spannteils von diesem mitgenommen werden und zwar unter Zwischenschaltung eines Federelements, sodass das Feststellteil 23 im geschlossenen Zustand des Spannmechanismus 5 von diesem Federelement an das Gegenfeststellteil 26 angedrückt wird.

Weiter wäre es auch denkbar und möglich die Eingriffselemente an einem langgestreckten Teil des Feststellteils 23 vorzusehen und am Gegenfeststellteil eine Nase vorzusehen, die in die Eingriffselemente eingreift.

In allen beschriebenen Ausführungsformen, in denen eine energiedissipierende Verschiebbarkeit des Gegenfeststellteils gegenüber der Stelleinheit vorgesehen ist, besitzt die Verschiebbarkeit des Gegenfeststellteils gegenüber der Stelleinheit einen definierten, vorgegebenen oder einstellbaren Kraft-Weg-Verlauf. Bei einer in axialer Richtung der Lenksäule wirkenden Kraft, die so groß ist, dass es zu einer Verschiebung des Gegenfeststellteils gegenüber der Stelleinheit kommt, verschiebt sich die Stelleinheit hierbei günstigerweise in axialer Richtung der Lenksäule.

Die Größe der auf die Stelleinheit in Längsrichtung der Lenksäule in Richtung zur Fahrzeugfront einwirkenden Kraft, ab der es zu einer Verschiebung des Gegenfeststellteils gegenüber der Stelleinheit kommt, ist vorzugsweise kleiner als 10000N, kann beispielsweise auch kleiner als 5000N sein.

### Legende

### zu den Hinweisziffern:

- 1: Trageinheit
- 2: Lenkspindel
- 3: lenkradseitiges Ende
- 4: Stelleinheit
- 5: Spannmechanismus
- 6: Längsrichtung
- 7: Richtung
- 8: Seitenwange
- 9: Seitenwange
- 10: Öffnung
- 11: Öffnung
- 12: Spannbolzen
- 13: Öffnung
- 14: Öffnung
- 15: Seitenwange
- 16: Seitenwange
- 17: Andrückteil
- 18: Betätigungshebel
- 19: Gegenscheibe
- 20: Nockenscheibe
- 21: Flächenansatz
- 22: Bolzenkopf
- 23: Feststellteil
- 24: Federelement
- 24a: Abschnitt
- 24b: Abschnitt
- 24c: Bügelabschnitt
- 25: Nut
- 26: Gegenfeststellteil
- 27: Seitenwand
- 28, 28a: Lasche
- 29: Eingriffselement
- 30: Schwenkachse
- 31: Nase
- 32: Aufreißplatte
- 32a: Grundplatte
- 33: Schwächungslinie
- 33a: Langloch
- 33b: Langloch
- 34: Schwächungslinie
- 35: Stift
- 36: Schlitz
- 37: Federelement
- 38: Bolzen
- 39: Langloch
- 39a: Streifenbereich
- 40: Zwischeneinheit
- 41: Seitenwange
- 42: Seitenwange
- 43: Längsnut

## Patentansprüche

1. Lenksäule für ein Kraftfahrzeug, die zumindest in ihrer Längsrichtung (6) verstellbar ist, umfassend eine Trageinheit (1), die mit dem Chassis des Kraftfahrzeugs verbindbar ist, eine Stelleinheit (4), die zwischen Seitenwangen (8, 9) der Trageinheit (1) angeordnet ist, und einen Spannmechanismus (5), in dessen geöffnetem Zustand die Stelleinheit (4) gegenüber der Trageinheit (1) zumindest in die Längsrichtung (6) der Lenksäule verstellbar ist und in dessen geschlossenem Zustand die eingestellte Position der Stelleinheit (4) gegenüber der Trageinheit (1) festgestellt ist und die einen Spannbolzen (12) umfasst, welcher Öffnungen (10, 11) in den Seitenwangen (8, 9) der Trageinheit (1) durchsetzt und beim Öffnen und Schließen des Spannmechanismus (5) um seine Achse gedreht wird, wobei mindestens ein zwischen den Seitenwangen (8, 9) der Trageinheit (1) angeordnetes und durch die Drehung des Spannbolzens (12) beim Öffnen und Schließen des Spannmechanismus (5) verstelltes Feststellteil (23) vorhanden ist, welches im geschlossenen Zustand des Spannmechanismus (5) in ein mit der Stelleinheit (4) verbundenes Gegenfeststellteil (26) eingreift oder zumindest bei einer im Falle eines Fahrzeugcrashes einsetzenden Verschiebung der Stelleinheit (4) gegenüber der Trageinheit (1) mit dem Gegenfeststellteil (26) in Eingriff gelangt und welches im geöffneten Zustand des Spannmechanismus (5) vom Gegenfeststellteil (26) distanziert ist, **dadurch gekennzeichnet, dass** das Gegenfeststellteil (26) an einer parallel zur Achse des Spannbolzens (12) liegenden Wand (27) der Stelleinheit (4) angeordnet ist oder von dieser gebildet wird und das Gegenfeststellteil (26) im Falle eines Fahrzeugcrashes unter Energieaufzehrung gegenüber der Stelleinheit (4) verschiebbar ist.

2. Lenksäule nach Anspruch 1, **dadurch gekennzeichnet, dass** das Gegenfeststellteil (26) an der unteren oder oberen Seitenwand (27) der Stelleinheit (4) angeordnet ist oder von dieser gebildet wird.

3. Lenksäule nach einem der vorhergehenden Ansprüche, **dadurch gekennzeichnet, dass** das Gegenfeststellteil (26) eine Mehrzahl von in Längsrichtung (6) der Lenksäule aufeinander folgenden Eingriffselementen (29) aufweist.

4. Lenksäule nach Anspruch 3, **dadurch gekennzeichnet, dass** die Eingriffselemente (29) von Ausnehmungen gebildet werden, in die zur Ausbildung eines in die Längsrichtung (6) der Lenksäule wirkenden formschlüssigen Eingriffs eine vorspringende Nase (31) des Feststellteils (23) einführbar ist.

5. Lenksäule nach einem der vorhergehenden Ansprüche, **dadurch gekennzeichnet, dass** das Feststellteil (23) am bzw. auf dem Spannbolzen (12) angeordnet ist.

6. Lenksäule nach einem der vorhergehenden Ansprüche, **dadurch gekennzeichnet, dass** im geschlossenen Zustand des Spannmechanismus (5) das Feststellteil (23) federelastisch an das Gegenfeststellteil (26) angedrückt ist.

7. Lenksäule nach Anspruch 6, **dadurch gekennzeichnet, dass** das Feststellteil (23) gegenüber dem Spannbolzen (12) verschwenkbar ist, wobei ein Federelement (24) zwischen dem Spannbolzen (12) und dem Feststellteil (23) wirkt.

8. Lenksäule nach einem der Ansprüche 1 bis 7, **dadurch gekennzeichnet, dass** das Gegenfeststellteil (26) über eine Biege- und/oder Aufreißlasche (28) mit der Stelleinheit (4) verbunden ist.

9. Lenksäule nach einem der vorhergehenden Ansprüche, **dadurch gekennzeichnet, dass** das Gegenfeststellteil (26) über mindestens einen Bolzen (38), der in ein Langloch (39) eingreift, dessen Lochbreite zumindest teilweise schmaler als der Außendurchmesser des Bolzens (38) ist, mit der Stelleinheit (4) verbunden ist, wobei der Bolzen (38) im Falle eines Fahrzeugcrashes unter Energieaufzehrung im Langloch (39) verschiebbar ist.

10. Lenksäule nach einem der Ansprüche 1 bis 9, **dadurch gekennzeichnet, dass** im geschlossenen Zustand des Spannmechanismus (5) die Seitenwangen (8, 9) der Trageinheit (1) beidseitig an die Stelleinheit (4) angedrückt sind oder an zwischen den Seitenwangen (8, 9) der Trageinheit (1) und der Stelleinheit (4) angeordneten Seitenwangen einer Zwischeneinheit (40) angedrückt sind, welche ihrerseits beidseitig an die Stelleinheit (4) angedrückt sind.

11. Lenksäule nach einem der Ansprüche 1 bis 10, **dadurch gekennzeichnet, dass** der Spannbolzen (12) durch die Ränder der von ihm durchsetzten Öffnungen (10, 11) in den Seitenwangen (8, 9) der Trageinheit (1) in Längsrichtung (6) der Lenksäule unverschiebbar gehalten ist.

12. Lenksäule nach einem der Ansprüche 1 bis 11, **dadurch gekennzeichnet, dass** die Verschiebung des Gegenfeststellteils (26) gegenüber der Stelleinheit (4) ab einer in Längsrichtung der Lenksäule auf die Stelleinheit (4) einwirkenden Kraft einsetzt, die kleiner als 10000N ist.

## Claims

1. Steering column for a motor vehicle, which is adjustable at least in its longitudinal direction (6), comprising a supporting unit (1) connectable with the chassis of the motor vehicle, a setting unit (4) disposed between side cheeks (8, 9) of the supporting unit (1), and a clamping mechanism (5), in the opened state of which the setting unit (4) is adjustable with respect to the supporting unit (1) at least in the longitudinal direction (6) of the steering column and in the closed state of which the set position of the setting unit (4) is secured with respect to the supporting unit (1), and which comprises a clamping bolt (12) which penetrates openings (10, 11) in the side cheeks (8, 9) of the supporting unit (1) and during the opening and closing of the clamping mechanism (5) is rotated about its axis, there being provided at least one securing part (23) disposed between the side cheeks (8, 9) of the supporting unit (1) and displaced through the rotation of the clamping bolt (12) during the opening and closing of the clamping mechanism (5), which in the closed state of the clamping mechanism (5) engages into a counter-securing part (26) connected with the setting unit (4), or at least during a displacement, beginning in the event of a motor vehicle crash, of the setting unit (4) with respect to the supporting unit (1) comes into engagement with the counter-securing part (26) and which, in the opened state of the clamping mechanism (5), is spaced apart from the counter-securing part (26), **characterised in that** the counter-securing part (26) is disposed on a wall (27), parallel zo the axis of the clamping bolt (12) of the setting unit (4) or is formed by it, and in the event of a motor vehicle crash, the counter-securing part (26) is displaceable with respect to the setting unit (4) with the consumption of energy.

2. Steering column according to Claim 1, **characterised in that** the counter-securing part (26) is disposed on the lower or the upper side wall (27) of the setting unit (4) or is formed by it.

3. Steering column according to one of the preceding claims, **characterised in that** the counter-securing part (26) comprises a plurality of engaging elements (29) one succeeding the other in the longitudinal direction (6) of the steering column.

4. Steering column according to Claim 3, **characterised in that** the engaging elements (29) are formed by cutouts into which, for the formation of a form-closure engagement acting in the longitudinal direction (6) of the steering column, a projecting nose (31) of the securing part (23) can be inserted.

5. Steering column according to one of the preceding claims, **characterised in that** the securing part (23) is disposed at or on the clamping bolt (12).

6. Steering column according to one of the preceding claims, **characterised in that** in the closed state of the clamping mechanism (5) the securing part (23) is spring-elastically pressed onto the counter-securing part (26).

7. Steering column according to Claim 6, **characterised in that** the securing part (23) is swivellable with respect to the clamping bolt (12), a spring element (24) acting between the clamping bolt (12) and the securing part (23)_

8. Steering column according to one of Claims 1 to 7, **characterised in that** the counter-securing part (26) is connected with the setting unit (4) via a bending and/or tear strap (28).

9. Steering column according to one of the preceding claims, **characterised in that** the counter-securing part (26) is connected with the setting unit (4) via at least one bolt (38) which engages into an elongated hole (39), whose hole width is at least partially narrower than the outer diameter of the bolt (38), the bolt (38), in the event of a motor vehicle crash, being displaceable in the elongated hole (39) with the consumption of energy.

10. Steering column according to one of Claims 1 to 9, **characterised in that** in the closed state of the clamping mechanism (5) the side cheeks (8, 9) of the supporting unit (1) are pressed bilaterally onto the setting unit (4) or onto side cheeks of an intermediate unit (40), disposed between the side cheeks (8, 9) of the supporting unit (1) and the setting unit (4), which, in turn, are pressed bilaterally onto the setting unit (4).

11. Steering column according to one of Claims 1 to 10, **characterised in that** the clamping bolt (12) is held non-displaceably in the longitudinal direction (6) of the steering column by the edges of the openings (10, 11) penetrated by it in the side cheeks (8, 9) of the supporting unit (1).

12. Steering column according to one of Claims 1 to 11, **characterised in that** the displacement of the counter-securing part (26) with respect to the setting unit (4) begins at a force, acting on the setting unit (4) in the longitudinal direction of the steering column, which is less than 10,000 N.

## Revendications

1. Colonne de direction pour véhicule automobile, mobile au moins dans son sens longitudinal (6), comprenant un ensemble de support (1) pouvant être relié au châssis du véhicule automobile, un élément de réglage (4) disposé entre des faces latérales (8, 9) du ensemble de support (1), et un mécanisme de serrage (5) où, lorsqu'il est ouvert, l'élément de réglage (4) est mobile par rapport à l'ensemble de support (1), du moins dans le sens longitudinal (6) de la colonne de direction et, lorsqu'il est fermé, la position fixée de l'élément de réglage (4) est immobilisée par rapport à l'ensemble de support (1), et comprenant une goupille de serrage (12) qui traverse des orifices (10, 11) dans les faces latérales (8, 9) de l'ensemble de support (1) et tourne autour de son axe lors de l'ouverture et de la fermeture du mécanisme de serrage (5), au moins une pièce d'immobilisation (23) se trouvant entre les faces latérales (8, 9) de l'ensemble de support (1) et étant déplacée lors de l'ouverture et de la fermeture du mécanisme de serrage (5) par la rotation de la goupille de serrage (12), pièce d'immobilisation qui s'engage, lorsque le mécanisme de serrage (5) est fermé, dans une contre-pièce d'immobilisation (26) reliée à l'élément de réglage (4) ou entre en prise avec la contre-pièce d'immobilisation (26) au moins lors d'un décalage de l'élément de réglage (4) par rapport à l'ensemble de support (1) qui intervient en cas de crash du véhicule et qui s'éloigne de la contre-pièce d'immobilisation (26) lorsque le mécanisme de serrage (5) est ouvert,
**caractérisée en ce que**
la contre-pièce d'immobilisation (26) est disposée sur une paroi (27) de l'élément de réglage (4) parallèle à l'axe de la goupille de serrage (12), ou est formée par celui-ci et
la contre-pièce d'immobilisation (26) peut se décaler par rapport à l'élément de réglage (4) en épuisant l'énergie, en cas de crash du véhicule.

2. Colonne de direction selon la revendication 1,
**caractérisée en ce que**
la contre-pièce d'immobilisation (26) est disposée sur la paroi latérale (27) inférieure ou supérieure de l'élément de réglage (4) ou qui est formée par celui-ci.

3. Colonne de direction selon l'une quelconque des revendications précédentes,
**caractérisée en ce que**
la contre-pièce d'immobilisation (26) présente une pluralité d'éléments d'engagement (29) qui se succèdent dans le sens longitudinal (6) de la colonne de direction.

4. Colonne de direction selon la revendication 3,
**caractérisée en ce que**
les éléments d'engagement (29) sont formés par des évidements dans lesquels un nez saillant (31) de la pièce d'immobilisation (23) peut être introduit pour arriver à un engagement par complémentarité de forme agissant dans le sens longitudinal (6) de la colonne de direction.

5. Colonne de direction selon l'une quelconque des revendications précédentes,
**caractérisée en ce que**
la pièce d'immobilisation (23) est disposée contre ou sur la goupille de serrage (12).

6. Colonne de direction selon l'une quelconque des revendications précédentes,
**caractérisée en ce que**
la pièce d'immobilisation (23) est pressée de façon élastique contre la contre-pièce d'immobilisation (26) lorsque le mécanisme de serrage (5) est fermé.

7. Colonne de direction selon la revendication 6,
**caractérisée en ce que**
la pièce d'immobilisation (23) peut basculer par rapport à la goupille de serrage (12), un ressort (24) agissant entre la goupille de serrage (12) et la pièce d'immobilisation (23).

8. Colonne de direction selon l'une quelconque des revendications 1 à 7,
**caractérisée en ce que**
la contre-pièce d'immobilisation (26) est reliée à l'élément de réglage (4) par une languette pliable et/ou de déchirage (28).

9. Colonne de direction selon l'une quelconque des revendications précédentes,
**caractérisée en ce que**
la contre-pièce d'immobilisation (26) est reliée à l'élément de réglage (4) au moins par l'intermédiaire d'un goujon (38) qui s'engage dans un trou oblong (39) dont la largeur est plus étroite, du moins en partie, que le diamètre extérieur du goujon (38), le goujon (38) pouvant se décaler dans le trou oblong (39) en cas de crash du véhicule avec épuisement de l'énergie.

10. Colonne de direction selon l'une quelconque des revendications 1 à 9,
**caractérisée en ce que**,
lorsque le mécanisme de serrage (5) est fermé, les faces latérales (8, 9) de l'ensemble de support (1) sont pressées des deux côtés contre l'élément de réglage (4) ou contre des faces latérales d'un élément intermédiaire (40), disposée entre les faces latérales (8, 9) de l'ensemble de support (1) et de l'élément de réglage (4), lesquelles faces latérales de l'élément intermédiaire sont pressées, quant à elles, des deux côtés, contre l'élément de réglage (4).

11. Colonne de direction selon l'une quelconque des revendications 1 à 10,
**caractérisée en ce que**
la goupille de serrage (12) est maintenue immobile dans les faces latérales (8, 9) de l'ensemble de support (1) dans le sens longitudinal (6) de la colonne de direction par les bords des orifices (10, 11) qu'elle traverse.

12. Colonne de direction selon l'une quelconque des revendications 1 à 11,
**caractérisée en ce que**
la contre-pièce d'immobilisation (26) commence à se décaler par rapport à l'élément de réglage (4) à partir d'une force inférieure à 10000 N qui agit sur l'élément de réglage (4) dans le sens longitudinal de la colonne de direction.
